# EUROPEAN PATENT SPECIFICATION

(11) **EP 4 682 651 B1**
(45) Date of publication and mention of the grant of the patent: **25.11.2026**
(21) Application number: 24189215.7
(22) Date of filing: 17.07.2024
(51) Int. Cl.: G05B 19/05

(54) **A METHOD FOR DEPLOYING AN INDUSTRIAL CONTROL PROCESS IN A CONVERGED NETWORK ENVIRONMENT**
VERFAHREN ZUM EINSATZ EINES INDUSTRIELLEN STEUERUNGSVERFAHRENS IN EINER KONVERGIERTEN NETZWERKUMGEBUNG
PROCÉDÉ DE DÉPLOIEMENT D'UN PROCESSUS DE COMMANDE INDUSTRIEL DANS UN ENVIRONNEMENT DE RÉSEAU CONVERGENT

(43) Date of publication of application: 21.01.2026
(73) Proprietor: Siemens Aktiengesellschaft, 80333 München (DE)
(72) Inventor: Mitsakis, Nikolaos, 81377 München (DE); Blenk, Andreas, 86916 Kaufering (DE)
(74) Representative: Siemens Patent Attorneys

(56) References cited:
- US-A1- 2019 199 626
- US-A1- 2020 293 351
- US-A1- 2022 083 368
- US-A1- 2023 176 884
- GUNDALL MICHAEL ET AL: "Downtime Optimized Live Migration of Industrial Real-Time Control Services", 2022 IEEE 31ST INTERNATIONAL SYMPOSIUM ON INDUSTRIAL ELECTRONICS (ISIE), IEEE, 1 June 2022 (2022-06-01), pages 253 - 260, XP034155015, DOI: 10.1109/ISIE51582.2022.9831601

## Description

### Technical Field

The disclosed embodiments generally relate to the field of process automation, in particular to the field of process automation in industrial plants. More specifically, the disclosed embodiments relate to a deployment of a Programmable Logic Controller or virtual Programmable Logic Controller in an industrial network environment.

### Background Art

In the field of industrial networks, there is a discernible trend toward increased flexibility, resulting in the evolution of convergent networks that seamlessly integrate information technology (IT) and operational technologies (OT). In recent years, a major shift towards common technology and networking occurred which is commonly referred to as a convergence of IT and OT. Many cybersecurity and monitoring technologies that were once limited to use in enterprise IT environments are now being leveraged by OT technology vendors and owners. Whereas previously it was unusual to find enterprise IT software and hardware in an OT environment, it is now firmly established and commonplace. The convergence observed within these networks also extends in an opposite direction, signifying a growing incorporation of operational technology (OT) equipment into information technology (IT) environments. This paradigm shift allows organizations to leverage the benefits of OT even within traditional IT infrastructures.

One prominent example is Programmable Logic Controller or PLC. While traditionally a Programmable Logic Controller or PLC was made of a physical device connected to industrial process equipment, PLCs of today are becoming more of what they always were: control processes on a computer. While a PLC traditionally consisted of a physical device that had to be co-located and connected to industrial process equipment, PLCs of today are increasingly becoming what was always at their core: industrial control processes running on a computer. As these industrial control processes no longer run in a dedicated physical device, they are now referred to as virtual PLCs or vPLC. Such vPLCs may be hosted on common of the shelve equipment (»COTS«) servers.

Contemporary configurations permit the integration of industrial machinery with virtual Programmable Logic Controllers (vPLCs) situated on virtualized servers.

The envisaged network infrastructure interlinking cells and data centers is predicated on IT apparatus, which is under the stewardship of IT administrative entities. A comprehensive connection between Operational Technology (OT) components - including production machines and vPLCs - is to be instituted via an amalgamation of IT devices, including servers and IT networking hardware like switches and routers, in conjunction with OT network apparatus such as PROFINET switches located within production cells. Nonetheless, this convergence engenders novel challenges related to a dynamic functionality of such systems.

As an infrastructure of converged networks is not governed by a single instance - traditionally under the purview of an OT operator - novel mechanisms are imperative to enable migrations or deployment of process software. Such deployment and/or migration may entail the transfer of a process software from one server to another, while maintaining continuous operation throughout the migration process, thus averting any interruptions in system functionality. Such deployment and/or migration of process software and operations is to be viable both within the boundaries of a manufacturing site, as well as externally, extending to subsidiary sites or data centers associated with the manufacturing site. In other words, the present embodiments may be used within factories, across factories, and across factories and cloud infrastructure.

Within the scope of this disclosure, the term »deployment« may be interpreted as the provision of a new instance of process software, which is predicated on a configuration of an existing instance of process software. This deployment allows for the potential reuse of some, if not all, components of the configuration of the existing instance of process software. In a particular sense, both deployment and migration may share a commonality in that they involve a creation of a duplicate of an existing process software and/or its configuration, with the aim of generating a new instance of the process software, which may be deployed at a same or different location. One difference between a deployment and a migration is that the existing process software is usually not terminated and/or deleted in the case of a deployment. Despite this difference, its technical impact on the following disclosure is minimal. Consequently, the term »migration« may be used interchangeably with »deployment« in the ensuing discourse, and vice versa.

In light of increasing proliferation of converged infrastructures and the incorporation of concepts such as virtual Programmable Logic Controllers (vPLCs) hosted on Commercial Off-The-Shelf (COTS) servers within data centers, a heightened reliance on resilience mechanisms arises. In the absence of novel resilience concepts, however, an operation of the automation system is at risk. Furthermore, the infrastructure may not be exclusively controlled by a single entity, such as the OT operator. Consequently, mechanisms are required that remain unaffected by actions taken by either IT or OT operators. In order to facilitate seamless vPLC server migration initiated by an IT operator, mechanisms must ensure uninterrupted communication between the automation system on a factory site and a remote data center, both of which may be part of a shared infrastructure. Unfavorably, known mechanisms - such as PROFINET protocol features or pre-copy migration methods offered by VMWare, a widely used virtualization platform, providing migration mechanisms for server maintenance and upgrades - currently do not facilitate transparent management and operation of OT equipment across such shared infrastructure. In particular, during server maintenance or upgrades, migration mechanisms offered by VMWare may disrupt a connection between a vPLC and controlled IO devices (I/O or input/output devices), which may lead to interruptions in the production process and reduce promised operational efficiency of hosting vPLCs on high-performance computing infrastructures by using commonly shared data centers and cloud infrastructure.

Document GUNDALL MICHAEL ET AL: "Downtime Optimized Live Migration of Industrial Real-Time Control Services", 2022 IEEE 31ST INTERNATIONAL SYMPOSIUM ON INDUSTRIAL ELECTRONICS (ISIE), IEEE, 1 June 2022 (2022-06-01), pages 253-260, XP034155015, DOI: IO.1IO9/ ISIE51582.2022.9831601 relates to live migration of industrial real-time control services, wherein a connection between source and destination hosts is established and a packet buffer is generated by a migration controller of the destination host and all incoming packets addressed to the container on the source host are copied, timestamped, and redirected to the destination host and cached in the packet buffer. A zero state control container is started on the destination host by its migration controller and the state map is transferred there. Subsequently both the state map and all data packets from the buffer with a timestamp equal to or greater than that of the state map are loaded and replayed in sequence.

### Summary of Invention

It is therefore an object of the invention to provide an interruption-free deployment or migration of a Programmable Logic Controller. The Programmable Logic Controllers may be embodied in a tangible device and/or as an industrial process software or virtual Programmable Logic Controllers (vPLCs). This objective is achieved by the subject-matter of the independent claims.

According to the invention, a method for deploying a Programmable Logic Controller or PLC for controlling at least one IO device (IOD) utilizing a network proxy (NP) during said transfer, is proposed, the method comprising the steps of:
a) intervening, by the network proxy (NP), an active connection between a source PLC (PLCS) and the IO device (IOD) by transparently forwarding messages exchanged between the source PLC (PLCS) and the IO device (IOD);
b) converting the active connection between the source PLC (PLCS) and the IO device (IOD) into a passive connection by respectively terminating messages exchanged between the IO device (IOD) and the source PLC (PLCS) by the network proxy (NP), the network proxy (NP) assuming control over the IO device (IOD) from the source PLC (PLCS), the network proxy (NP) continuing to respond to messages sent from the IO device (IOD) by the network proxy (NP) instead of the source PLC;
c) establishing a second passive connection between a destination PLC (PLCD) and the network proxy (NP) for transparently forwarding duplicate messages exchanged between the network proxy (NP) and the IO device (IOD) to the destination PLC (PLCD), wherein the network proxy (NP) is continuing to control the IO device (IOD);
d) terminating the passive connection between the source PLC (PLCS) and the IO device (IOD), converting the second passive connection between the destination PLC (PLCD) and the network proxy (NP) into an active connection extending from the destination PLC (PLCD) to the IO device (IOD), the destination PLC (PLCD) assuming control over the IO device (IOD) from the network proxy (NP).

The embodiments propose modules and/or mechanisms which may be implemented in networking software, as a hybrid of networking software and/or networking hardware. Alternatively, the proposed modules and/or mechanisms may be exclusively embodied in networking hardware, accommodating diverse deployment scenarios. The proposed modules and/or mechanisms may enable an interruption-free operation of control settings in the event of a network, a server, or a hardware failure, thereby preventing interruptions due to scheduled or unscheduled maintenance, interruptions or system failures. The proposed embodiments may generally improve the resilience of automation systems based on virtual and software-based infrastructure. The skilled artisan will recognize that the disclosed embodiments are applicable and offer advantages for both, virtualized programmable logic controllers (PLCs) and their non-virtualized or traditional counterparts.

In the realm of industrial automation, the term »transparent operation« denotes the degree to which actions and decision-making mechanisms of an automated system are predictable and deterministic, adhering to a pre-established protocol. This is to preclude occurrences of system halts or malfunctions, which could exert a substantial influence on the production workflows and culminate in considerable economic detriment to an enterprise. The term »transparently migrating« accordingly means that the relocation of process software is conducted in a manner that ensures all actions taken during the migration are consistent with uninterrupted production, allowing for a seamless transition without disrupting ongoing operations. A major object is to maintain the integrity and continuity of production workflows.

Embodiments disclosed herein pertain to a method for migrating process software that obviates the necessity for completing the migration within a singular operational cycle. The method rather ensures that, upon completion of the migration, the migrated process software will achieve an operational state corresponding to the operational state of the originating process software thereby ensuring a continuity of operation while preventing interruption of connectivity.

A main actor of this migration - which may be hereinafter referred to as network proxy or proxy - may be placed flexibly across the network infrastructure. This network proxy may be advantageously positioned at desired locations, including the periphery of production cells, embedded within the IT network, or situated in or proximate to the industrial data center, thereby facilitating the migration process.

### Brief Description of the Drawing

The objects as well as further advantages of the present invention will become more apparent and readily appreciated from the following description of the preferred embodiments, taken in conjunction with the accompanying drawing of which:
- FIG. 1: illustrates a fundamental approach for migration of industrial control process according to embodiments;
- Fig. 2: illustrates a schematic process chart depicting an exchange of data transmissions for a migration process according to the state of the art;
- Fig. 3: illustrates a schematic diagram of functional units participating in a migration process according to embodiments;
- Fig. 4: illustrates a schematic process chart depicting high-level processing of packets within a network proxy;
- Fig. 5: illustrates a schematic diagram of different placement options of a network proxy;
- Fig. 6: illustrates a schematic diagram of state transfers in a migration process;
- Fig. 7: illustrates a schematic process chart depicting an exchange of data transmissions with a network proxy being configured to actively control an IO device; and;
- Fig. 8: illustrates a schematic process chart depicting a migration process according to the embodiments.

### Description of Examples

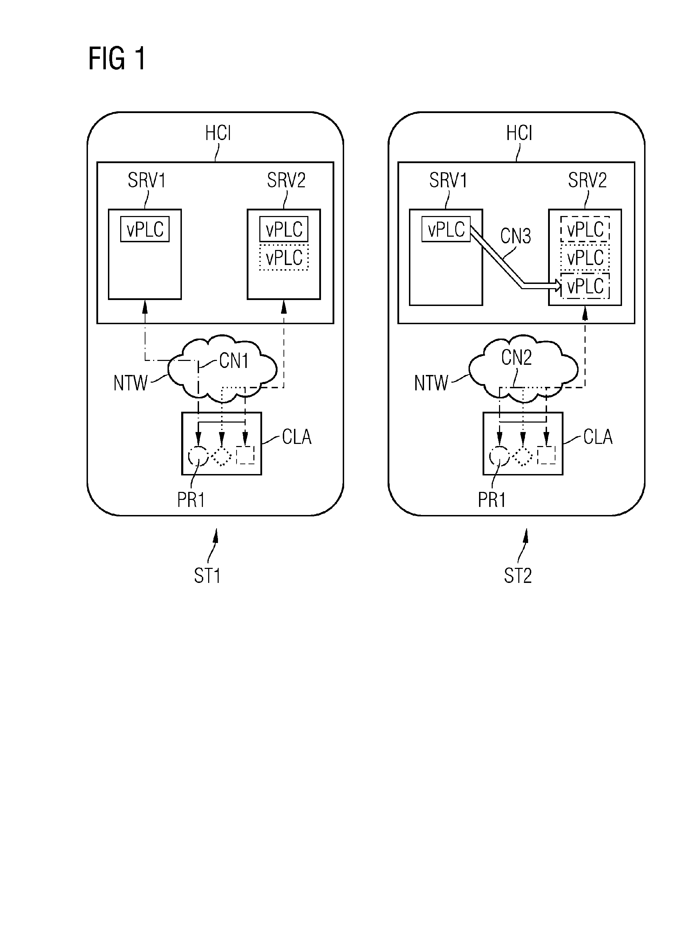

FIG. 1 depicts an illustrative use case which may be addressed by the embodiments. In a continuous operation of a converged industrial network environment, a virtual Programmable Logic Controller vPLC or a - not shown - traditional Programmable Logic Controller embodied in a device, may have be deployed or migrated from a first server SRV1 to a second server SRV2 while integrity and continuity of production workflows are not substantially affected. A left part of the FIG. 1 shows a first state ST1 of a system before migration, a right part of the FIG. 1 shows a second state ST1 of a system after migration.

In the illustrative environment according to FIG. 1 - intentionally simplified for the purpose of fundamental comprehension - an exemplary production cell CLA may be connected via a converged network NTW with a hyperconverged infrastructure HCI. Hyperconverged infrastructures are generally known in the art and may comprise industrial set ups including a plurality of servers, computers, virtual machines, storage and network solutions, which may be integrated and centrally controlled. As exemplary components of the hyperconverged infrastructure HCI, a first and a second server SRV1, SRV2 are shown, whereby - with regard to the description further down below - the first server SRV1 may also be referred to as the destination server and the second server SRV2 may also be referred to as a target server.

A number of processes including production processes may be executed in the production cell CLA whereby some production processes are shown in Figure 1 with a circular, diamond-shaped or square shape. Only one of these processes symbolized by a circular shape is hereinafter referred to as first process PR1 and described in more detail below. While industrial production processes within the production cell CLA have traditionally been controlled by a Programmable Logic Controller or PLC co-located with a - not shown - production machine in the production cell CLA for executing an industrial control process, these industrial production processes of today are no longer necessarily confined to a dedicated production machine or device. In other words, contemporary industrial production processes have transcended the need for physical co-location with production machinery within the production cell CLA. Instead, industrial control process vPLC as shown in FIG. 1 may be executed in the hyperconverged infrastructure HCI on remote first or second servers SRV1, SRV2 as shown in the drawing.

Virtualization of these control processes vPLC in the production cell CLA may mean that the control process vPLC for controlling the production process PR1 is not executed in the production cell CLA itself but on a server SRV1, SRV2, in this case the first server SRV1.

Virtualization may further mean that the virtualized process vPLC executed in the first server SRV1 may be logically connected to the production process PR1 in that the virtualized process vPLC produces the same effects as if it were executed locally in the production cell CLA.

Turning now to the right part of the FIG. 1 in which a second state ST2 of the system during or after a migration of one of the control processes vPLC from the source server SRV1 to the destination server SRV2 is shown. The migration of the control process vPLC controlling the production process PR1 is illustrated by a logical connection CN3 extending from the control process vPLC being hosted by the first server SRV1 to the newly established control process vPLC being hosted by the second server SRV2.

After the migration of the control process vPLC has been completed - and/or even while the migration of the control process vPLC is in progress - the previous logical connection CN1 of the production process PR1 may be terminated - or in progress of being terminated - in favor of a newly established logical connection CN2 diverting to the newly established control process vPLC being hosted on the second server SRV2. It is an object of the embodiments to enable this deployment or migration free of interruption. It is a task of further embodiments to enable this migration not to take place all at once without any time delays, but preferably in a continuous, cyclically structured or - in other words - transparent operation enabling the migration without downtime of individual components.

In the realm of industrial automation, the term »transparent operation« may denote a degree to which actions and decision-making mechanisms of an automated system are predictable and deterministic, adhering to a pre-established protocol. This is to preclude occurrences of system halts or malfunctions, which could exert a substantial influence on the production workflows and culminate in considerable economic detriment to an enterprise. The term »transparently migrating« may accordingly mean that the relocation of control processes or, more generally, process software is conducted in a manner that ensures all actions taken during the migration are consistent with uninterrupted production, allowing for a seamless transition without disrupting ongoing operations. A main objective is to maintain the integrity and continuity of production workflows.

According to embodiments, modules and/or mechanisms may be used to enable a transparent operation of control process vPLC in a converged OT/IT network environment. The OT/IT network may advantageously provide deterministic network guarantees synchronizing substantially all network elements incurred in the migration process. In order to provide deterministic network guarantees, the embodiments may apply a scheduling-based mechanism to provide an interruption-free migration process.

According to embodiments, the migration may be supported or guided by a newly proposed network proxy. The proposed network proxy - not shown in FIG. 1 - may be operated for managing one or more logical connections between control process vPLC hosted on high performance infrastructures, while the production cell CLA - or production machines located in the production cell CLA - may be connected by a network NTW being characterized by deterministic IT network infrastructure which may provide deterministic network traffic guarantees. In this description, a reference to a production cell CLA implicitly includes production machines or devices located within the production cell CLA, without necessitating explicit mention.

The network proxy may advantageously ensure that at least one logical connection CN1, CN2 between the production process PR1 and the control process vPLC assigned to this production process PR1 may remain intact and uninterrupted during migration of the control process vPLC. Moreover, the proposed network proxy - not shown in FIG. 1 - may be flexibly placed across the network infrastructure, i.e., at the production cell boarders, within the network NTW, and at or within the hyperconverged infrastructure HCI, for example within an industrial data center.

According to further embodiments, the migration may be supplemented by implementing mechanisms within the control process vPLC for buffering signals in order to synchronize states or status conditions of the previous instance of the control process vPLC and the new instance of the control process vPLC instantiated after the migration.

According to the proposed embodiments, control software vPLC may be transparently migrated between servers SRV1, SRV2 without needing to substantially complete the migration instantaneously or within one cycle. Rather or even more, the embodiments ensure that the newly created instance of the control software vPLC to be migrated ultimately ends up in the same operating states as the finally terminated previous instance of the control software vPLC, thereby preventing an interruption of a logical connection CN1, CN2 between the production process PR1 assigned to the control software vPLC while migration is in progress.

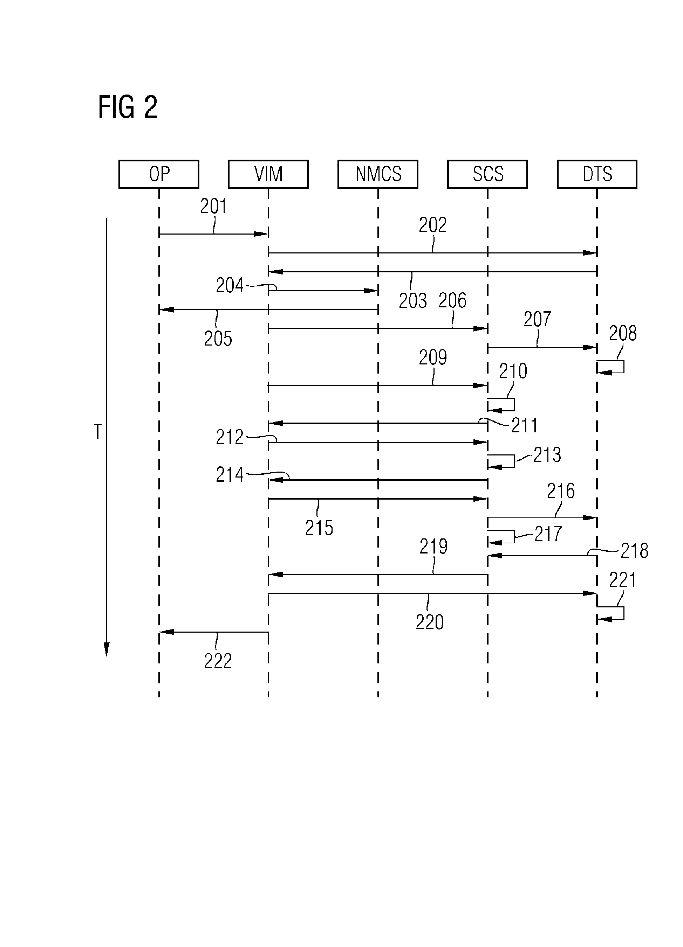

In the following, a sequence diagram as shown in FIG. 2 is employed to illustrate the execution of a migration process following conventional practices while emphasizing potential drawbacks inherent to this conventional migration approach. Notably, the conventional migration approach may be fraught with considerable disadvantages and, in various instances, may even result in migration failures.

FIG. 2 shows a schematic process chart depicting a chronologically ordered exchange of control and data transfer transmissions amongst various functional units OP, VIM, NMCS, SCS, DTS cooperating to environmentally control a migration of a virtual programmable logic controller. A timeline T is shown on the left side of figure 2 in which consecutive points in time are chronologically ordered, such that data points in time are further down than earlier points in time. For each of the functional units OP, VIM, NMCS, SCS, DTS a respective vertical dash line is plotted in order to illustrate a message exchange of the respective functional unit in relation to the point in time. The sequence diagram, as depicted in FIG. 2, may represent the outcome of a network operator OP seeking - e.g. for maintenance purposes - to migrate a control software vPLC being executed inside a virtual machine or a container from a source server SCS to a destination server DTS.

In a first step of the method as shown, the operator OP may enter a migration command to a - not shown - management system, e.g., via a console. In the course of this command, a first command message 201 is transferred from the operator OP to a virtual infrastructure manager VIM, the command message 201 instructing the virtual infrastructure manager VIM to migrate a - not shown - virtual Programmable Logical Controller or vPLC from a source server SCS to a destination server DTS.

In a consecutive step, a second command message 202 is sent from the virtual infrastructure manager VIM to the destination server DTS instructing the destination server DTS to create a new instance of a virtual machine or, more specifically, a new instance of a virtual Programmable Logical Controller vPLC. The destination server DTS, after having created the new instance as instructed, responds to the virtual infrastructure manager VIM by transmitting a third report message 203 reporting the successful creation.

In a consecutive step, a network management and control system NMCS is used to check whether a network path exists which may guarantee a requested latency. To this end, the virtual infrastructure manager VIM sends a command message 204 to the network management and control system NMCS instructing the network management and control system NMCS to find and setup a new network path between devices within the production cell along with further devices such as input/output or IO devices and the destination server DTS. However, a service-oriented architecture or SoA of the present environment may already fail at this point due to improper resource planning or missing mechanisms. The network management and control system NMCS would, therefore, respond by a message 205 indicating the operator OP that the migration cannot be performed. This error message 205 may be sent for the cases in which a deterministic path with a required latency cannot be found and/or improper resource planning or missing mechanisms. For one of these reasons, the process would then be aborted in an undesirable manner.

The following messages 206 until 222 are exchanged for the alternative case that a deterministic path may be found. If a path may be found, the process may continue and the actual migration process may start. Given this case, the following messages 206 until 211 are exchanged to handle the migration. In a service-oriented architecture or SoA the migration is processed in that memory contents of the previous virtual machine or VM are transmitted to the newly instantiated virtual machine or VM.

The virtual infrastructure manager VIM may transmit a sixth command message 206, instructing the source server SCS to start an iterative state transfer. Consequently, the source server SCS transmits a seventh command message 207 to the destination server DTS with an instruction to transfer its memory contents. In a loop 208, the destination server loads memory contents into the newly created virtual PLC. The aforementioned command message 207 and loop 208 are related to an iterative pre-copy migration.

In the following steps 209, 210, 211, a case is handled in which a stopping condition has been reached. The virtual infrastructure manager VIM sends a ninth command message 209 to the source server SCS instructing the source server SCS to stop transferring the memory. In a loop 210, the source server SCS is stopping the transfer. Consequently, after having concluded stopping the transfer, the source server SCS sends an eleventh notification message 211 to the virtual infrastructure manager VIM reporting that its memory transfer has been stopped.

After the memory contents have been entirely transferred, the handover process may start whereby subsequently exchanged messages 212 until 222 are exchanged to handle the handover process. In a service-oriented architecture or SoA, the handover is processed in that the previous virtual machine or VM has to be stopped so that the memory of the previous virtual machine or VM is prevented from being furtherly updated. Accordingly, this handover necessarily entails an unavoidable service interruption and/or downtime for portions of the system controlled by the virtual Programmable Logical Controller or vPLC. However, this contradicts the primary object of the disclosed embodiments, which aims to avoid service interruptions and downtimes whenever feasible. As a result, the existing known method suffers from notable drawbacks in this respect.

A twelfth command message 212, sent from the virtual infrastructure manager VIM to the source server SCS, instructs the source server SCS to stop the virtual machine or VM. In a loop 213, the source server SCS is stopping the process for the virtual Programmable Logical Controller or vPLC. After the process been stopped, a fourteenth notification message 214 is dispatched to the virtual infrastructure manager VIM reporting the virtual Programmable Logical Controller or vPLC having been stopped. In the usual and presently used service-oriented architecture or SoA, the handover is processed in that the previous virtual machine or VM has to be stopped so that the memory of the previous virtual machine or VM is prevented from being furtherly updated. This, however, may insert a short connection interrupt whose duration is not deterministic. Accordingly, the connection may be potentially interrupted for a time span - in between exchanging messages 215 until 219 - which may overlap with the conclusion of the memory migration process and which potentially would have been required to conclude the memory migration process.

In a subsequent step, a fifteenth command 215 is sent from the virtual infrastructure manager VIM to the source server SCS instructing the source server SCS to transfer the remaining data and/or memory contents. The source server SCS forwards this command by a subsequent sixteenth command message 216 sent to the destination server DTS, instructing the destination server DTS to transfer the remaining memory data. By a loop 217, the destination server DTS is loading memory contents into the newly created virtual Programmable Logical Controller or vPLC. By a report message 218, the destination server DTS informs the source server SCS that the memory data have been fully received. The source server SCS sends a nineteenth report message 219 to the virtual infrastructure manager VIM, informing that virtual infrastructure manager VIM that the transfer has been completed. In a consecutive step, the virtual infrastructure manager VIM sends a twentieth instruction message 220 to the destination server DTS instructing the destination server DTS to start the virtual PLC. The destination server DTS starts the new virtual Programmable Logical Controller or vPLC instance by a loop 221. In a final step 222, the virtual infrastructure manager VIM reports to the operator OP that the migration has been completed.

After the memory contents have been migrated, the new virtual machine or VM may be started and the industrial process may be started up or continued. During the system start up, however, the processing machine may have entered a stop state. Furthermore, safety applications like Profinet Safety may have fully stopped the production process, which may cause significant process impacts with unpredictable consequences. The description of presently known methods based on FIG. 2 has shown that using the virtual infrastructure manager VIM to »simply« start a new virtual machine or VM running the vPLC presents significant pitfalls in practice. The prevailing challenge of unavoidable system interruptions significantly impacts industrial processes, where uninterrupted operation is an essential prerequisite.

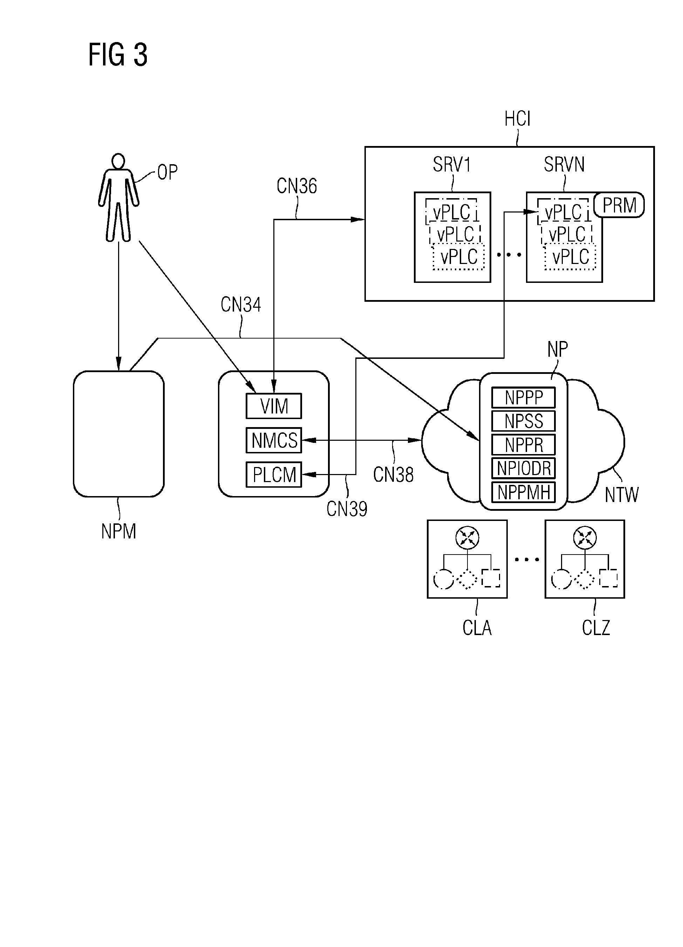

Fig. 3 illustrates a schematic diagram of functional units participating in a migration process according to embodiments. The present invention is predicated upon the objective of providing an interruption-free migration mechanisms for an industrial control process such as a virtual programmable logic controller. In a central block of FIG. 3, three functional units VIM, NMCS, PLCM are depicted. These functional units may be known in principle in the state of the art and may receive numerous functional extensions through the present embodiments, as further explained below.

In the left portion of FIG. 3, an operator OP is shown to interact with the virtual infrastructure manager VIM and /or with a network proxy manager NPM. As to the interaction with the network proxy manager NPM, a user interface may enable the operator OT or another management system to interact with the network proxy NP - one of the main components being described in detail further down below - and/or its modules. The operator OP may, for example, manually instruct the network proxy manager NPM to take control of a specific IO Device when a migration is to be initiated.

In the right portion of FIG. 3, a layered arrangement substantially corresponding to the layers of FIG. 1 is depicted. The arrangement shown in FIG. 3 comprises two or more exemplary production cells CLA, CLZ, which may exchange data via a converged network NTW with a hyperconverged infrastructure HCI. As exemplary components of the hyperconverged infrastructure HCI a first and an N-th server SRV1, SRVN are shown, where N may represent a natural number.

This fundamentally similar arrangement in layers is complemented with functional units according to a middle and a left area of FIG. 3. These additional functional units may control the migration according to the disclosed embodiments. In the following, the properties of these functional units are described before their interaction and their interrelationship is described in more detail. Hereinafter, the term packets or data packets may refer to data units used for exchanging messages, partial messages or signals within the packet-oriented network NTW or between individual modules using internal signal transmissions.

In a central block of FIG. 3, three functional units VIM, NMCS, PLCM are depicted, which may each be known individually:
- A virtual infrastructure manager VIM may provide features for instantiating new virtual machines or containers that may host the virtual Programmable Logic Controllers or vPLCs on physical servers.
- A network management and control system NMCS may provide capabilities for requesting deterministic network paths and for configuring or re-configuring network elements in order to host network proxy capabilities in a predictable manner. The network management and control system NMCS may further provide interfaces for interacting with further functional units in order to transmit or receive signals or messages concerning triggered operations.
- A programmable logic controller manager PLCM may be understood as a software portal for providing access to a wide range of digitalized automation services including programmable logic controllers. The programmable logic controller manager PLCM may be embodied by a portal known as TIA Portal or Totally Integrated Automation Portal which has been developed by the applicant of the present proposal. The programmable logic controller manager PLCM may host capabilities to allow an operator OP to interact with virtual programmable logic controllers vPLC. According to the embodiments described hereinafter, the programmable logic controller manager PLCM may be extended to enable the operator OP to perform a migration between servers such as edge clouds. The operator OP may also receive status information about current migration processes. The operator OP may further configure an orchestration service OS as described below. The operator OP may configure the orchestration service OS with the object of achieving specific operation targets, e.g., resource optimization.

Further functional units as depicted across FIG. 3 may pertain to components of the present embodiments:
- The network proxy NP may serve as an intermediary facilitating the migration of virtual or non-virtual Programmable Logic Controllers. The network proxy NP may encompass various functionalities, including traffic steering, packet modification/duplication, and signal storage or buffering. The network proxy NP may integrate components or modules such as a network proxy packet parser NPPP, a network proxy signal storage NPSS, a network proxy PLC replier NPPR, a network proxy IO device replier NPIODR, and a network proxy packet manager handler NPPMH as described below. The Network Proxy Manager NPM, also separately depicted in the drawing, may also be a component or module assigned to the network proxy NP or being an integral part thereof. The network proxy NP may either be realized in software, in software & hardware, or in hardware only. Accordingly, the network proxy NP may be hosted on servers and/or on programmable networking hardware of any kind including programmable network switches, smart network interface card or NIC or SmartNICS etc.
- the network proxy packet parser NPPP may parse data packets being relevant for a seamless migration of vPLCs or PLCs. The NPPP may be designed to minimize processing delays by selectively parsing only essential elements of a data packet. This may imply that subsequent or subordinate modules exclusively handle the parsed segments of each packet for ensuring streamlined and targeted processing throughout the migration process.
- the network proxy signal storage NPSS may store critical input signals originating from the virtual or non-virtual PLC, the IO devices, and/or the network proxy manager NPM. Upon activation of a new virtual or non-virtual PLC instance, after a migration initialization, and/or initiation of its signal transmission, the network proxy NP may respond by replaying the most recent stored signals to the new virtual or non-virtual PLC. This guarantees that the new virtual or non-virtual PLC is promptly updated with the current state of an IO device. Consequently, this approach ensures that the control stages of both the virtual or non-virtual PLC and the NP converge, enabling the seamless continuation of operations when the NP hands control of an IO device back to the virtual or non-virtual PLC. Without the NPSS module, handing control of an IO device back to a newly migrated vPLC or provisioned PLC by the network proxy manager NPM would result in a disruption within the control sequence.
- the network proxy PLC replier NPPR may be responsible for acting on incoming virtual or non-virtual PLC packets. The module may operate by extracting information from each incoming packet and utilizing the network proxy signal storage NPSS to store this information. Subsequently, the network proxy PLC replier NPPR may read the latest known information about the IO device for which the incoming virtual or non-virtual PLC packet was intended from the network proxy signal storage NPSS. This information is then used to generate the appropriate content for the response packet to the initial incoming virtual or non-virtual PLC packet. From the perspective of the virtual or non-virtual PLC, the received IO device packet appears as though it was directly sent from an actual IO device, thus ensuring seamless operation and communication.
- the network proxy IO device replier NPIODR may be responsible for acting on incoming IO device packets. Like the network proxy PLC replier NPPR, the network proxy IO device replier NPIODR may extract information from each incoming packet and/or use the network proxy signal storage NPSS to store this information. Subsequently, the network proxy IO device replier NPIODR may access the network proxy signal storage NPSS to retrieve the most recent- or latest known - information pertaining to the virtual or non-virtual PLC for which the incoming IO device packet was intended. This information, then used to generate the appropriate content for the response packet to the initial IO device packet. From the perspective of the IO device, the received virtual or non-virtual PLC packet appears if it was directly sent from an actual virtual or non-virtual PLC. This comprehensive orchestration by the network proxy IO device replier NPIODR ensures seamless and uninterrupted flow of information avoiding operation interruptions.
- the network proxy manager NPM may be utilized for instructing the network proxy NP that a migration is imminent. The network proxy manager NPM may instruct the network proxy NP to either assume control of the IO devices or to transfer it back to the actual vPLCs. Moreover, the network proxy manager NPM may modify configuration settings on the network proxy NP, potentially accounting for different PROFINET cycle times. Additionally, the network proxy manager NPM may compute and write control signals onto the network proxy signal storage NPSS. These control signals may then be used by the network proxy NP as input control signals for an IO device.
- the network proxy packet manager handler NPPMH may manage incoming signals from the network proxy manager NPM. In order to prioritize managing packets exchanged with the network proxy manager NPM over other incoming packets, the managing packets exchanged with the network proxy manager NPM may undergo distinct processing. This prioritization may be optional. Such prioritization may ensure efficient handling of managing packets compared to other incoming packets. The prioritization may, in other words, ensure that any configuration changes by the NPM on the network proxy NP may be implemented as quickly as possible. The network proxy packet manager handler NPPMH may also store process configuration information extracted from an incoming managing packet in the network proxy signal storage NPSS. Upon successful handling of a managing packet received from the network proxy manager NPM, the network proxy packet manager handler NPPMH may generate a response message by an acknowledgement packet notifying the network proxy manager NPM that the change has been successful.

In addition to - not further detailed - interfaces CN36, CN38, CN39 in connection with the virtual infrastructure manager VIM or one of its submodules - the network management and control system NMCS and /or the PLC manager PLCM - an interface CN34 for exchanging information such as control signals and/or messages between the network proxy manager NPM and the network proxy NP may be provided.

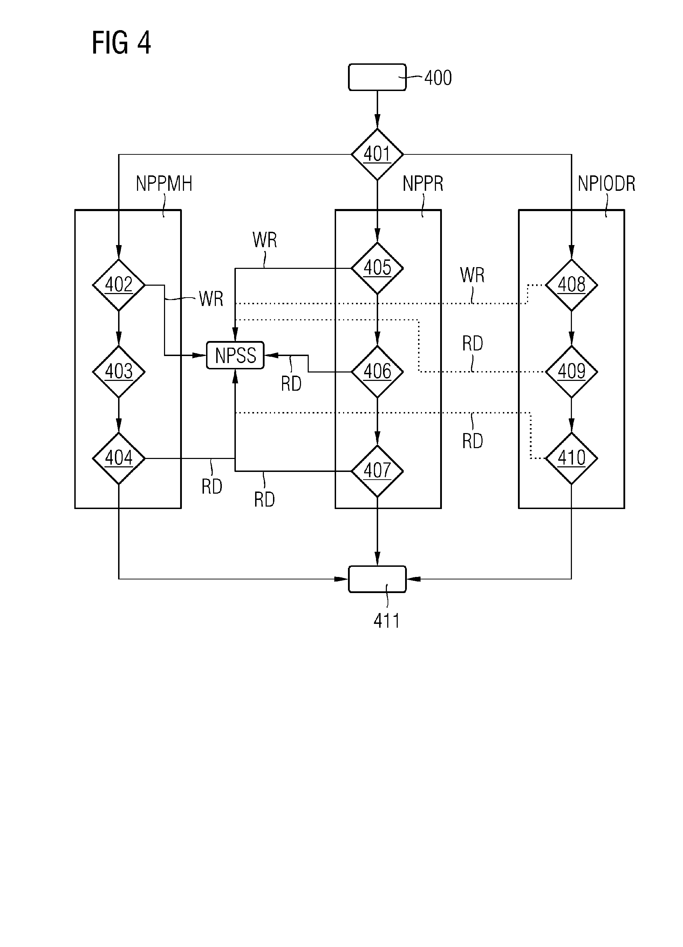

FIG. 4 illustrates a schematic process chart depicting high-level processing of data packets within a network proxy NP. A data packet as used herein may encompass all kinds of data units used for exchanging messages, partial messages or signals within a packet-oriented network or between individual modules using internal signal transmissions. The term data transcends structural specifics, such as its format, header, or checksum formation, as it need not always be transmitted over a network. Instead, it may be used to represent a general data unit or serve as an organizational form for a specific data quantity.

In FIG. 4, a graphical representation of high-level inner workings and interaction of major components of the network proxy NP is shown in a scenario where the network proxy NP is actively controlling one or more IO Devices. The figure highlights how the network proxy NP may discriminate and process packets based on their contents. The discrimination allows distinguishing NPM packets, IO Device packet and PLC packets.

An incoming data packet 400 may be processed by a routine 401 of the network proxy packet parser NPPP- not shown in this FIG. 4 - and internally parsed as to determine its affiliation to one of the network proxy packet manager handler NPPMH - a branch on the far left in FIG. 4 -, the network proxy PLC replier NPPR - a branch in the middle -, and the network proxy IO device replier NPIODR as depicted by the far right branch in FIG. 4.

Incoming management packets may be forwarded to the network proxy packet manager handler NPPMH, where a routine 402 may extract the management packet. The routine 402 may also store - or write - process configuration information extracted from the incoming managing packet in the network proxy signal storage NPSS using a write operation WR. A subsequent or consecutive routine 403 may modify or change configuration settings on the network proxy NP or one of the modules affiliated with the network proxy NP. Once the configuration settings have been updated, a subsequent or consecutive routine 404 may construct an acknowledgement message or acknowledgement packet which may be dispatched as a reply packet 411 in response to the incoming packet 400.

Incoming virtual or non-virtual PLC packets may be forwarded to the network proxy PLC replier NPPR, where a routine 405 may extract the incoming packet received from a PLC. The routine 405 may also store - or write - information extracted from the incoming PLC packet in the network proxy signal storage NPSS using a write operation WR. A subsequent or consecutive routine 406 may generate IO device content, i.e. generate an appropriate content for the reply packet 411. In order to generate the device content, the routine 406 may retrieve, by a read operation RD, information from the network proxy signal storage NPSS. This information may pertain to the latest known information about the IO device for which the PLC packet was intended. Once the IO device content replying to the incoming PLC packet has been finalized, a subsequent or consecutive routine 407 may construct an acknowledgement message or acknowledgement packet which may be dispatched as a reply packet 411 in response to the incoming packet 400.

Incoming IO device packets may be forwarded to the network proxy IO device replier NPIODR, where a routine 408 may extract the incoming packet received from an IO device. The routine 408 may store - or write - information extracted from the incoming IO device packet in the network proxy signal storage NPSS using a write operation WR. A subsequent or consecutive routine 409 may generate PLC content, i.e. generate an appropriate content for the reply packet 411. In order to generate the PLC content, the routine 409 may access the network proxy signal storage NPSS to retrieve - or read -most recent - or latest known - information pertaining to the virtual or non-virtual PLC for which the incoming IO device packet was intended. Once the PLC content replying to the incoming IO device packet has been finalized, a subsequent or consecutive routine 410 may construct an acknowledgement message or acknowledgement packet which may be dispatched as a reply packet 411 in response to the incoming packet 400.

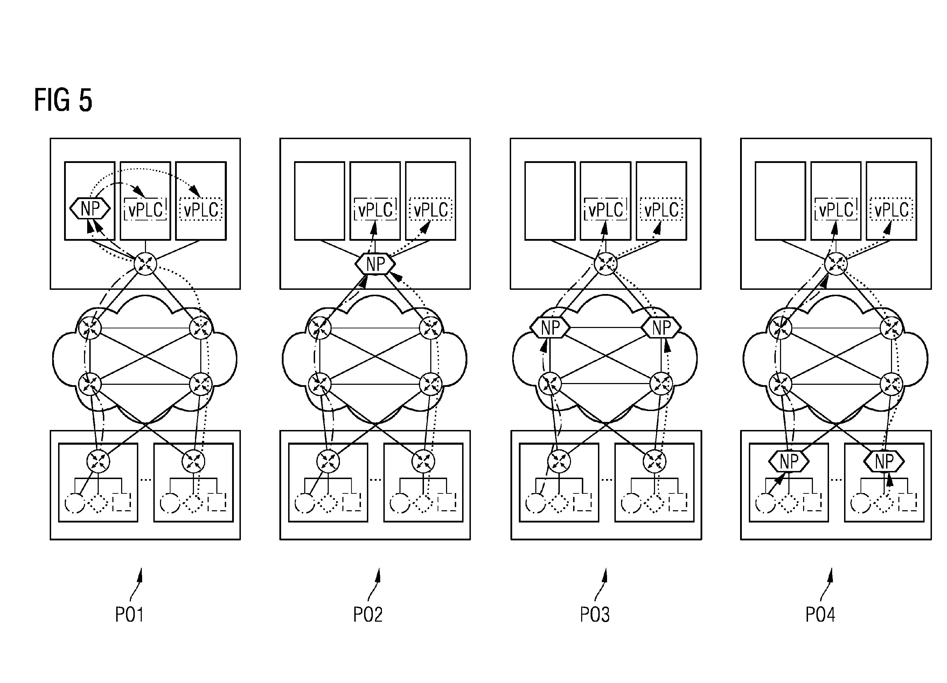

Fig. 5 illustrates different placement options of the network proxy NP or network proxy module NP. According to a first placement option PO1, one or more network proxy modules NP may be placed on a server, in the exemplary placement option PO1 according to FIG. 4 the network proxy module NP may be executed on a far-left server in the hyperconverged infrastructure HCI. This first placement option PO1 may be described as a software and server-based deployment of the network proxy NP.

According to a second placement option PO2, one or more network proxies NP may be operated as a dedicated network proxy device NP being, for example, assigned to and/or located in the hyperconverged infrastructure HCI. This second placement option PO2 may be described as a hardware-based deployment of the network proxy device NP within a hyperconverged infrastructure HCI or within a data center.

According to a third placement option PO3, one or more network proxies NP may be operated as a network proxy device which may additionally act as a switch or a router within the network NTW. The network proxy NP may be alternatively or additionally functionally realized by a cooperation of one or more of network devices as shown in FIG. 4. This third placement option PO3 may be described as a hardware-based deployment of the network proxy device NP within a the network NTW.

According to a fourth placement option PO4, one or more network proxy modules NP may be placed within a production cell or within a production machine. In the exemplary placement option PO4 according to FIG. 4 one or more network proxy modules NP may be executed within two or more production cells CLA, CLZ. Accordingly, this fourth placement option PO4 may be described as a hardware-based deployment of the network proxy NP within one or more production cells CLA, CLZ.

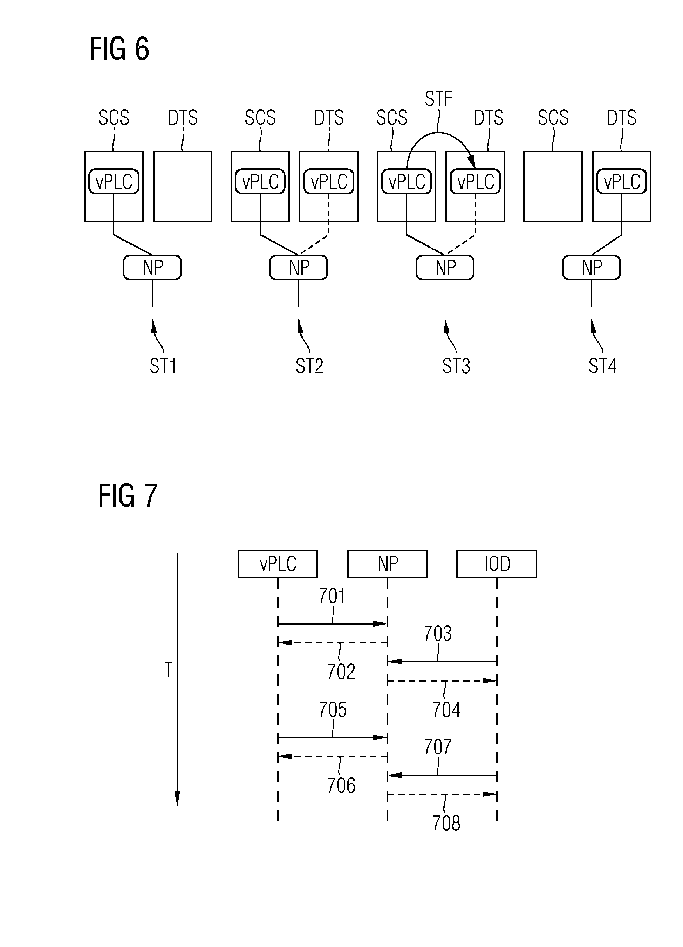

Turning now to Fig. 6 which illustrates a high-level schematic diagram of state transfers in a migration procedure according to the present embodiments. The present disclosure is generally directed to coordinating operations of devices that are part of an operation technology (OT) system using information technology (IT) systems. Industrial control systems may be used to control and manage operations of devices that are part of the OT system. However, operators of these industrial automation systems may benefit from managing assets, such as programmable logic controllers (PLCs), that are part of the OT network using similar processes provided by information technology systems. By way of example, container orchestration systems may be used in IT systems to manage IT assets. That is, certain IT systems may leverage software containers (e.g., operating system level virtualization) in conjunction with container orchestration systems (e.g., Docker, Kubernetes) to coordinate the construction and deployment of various containers across a number of computing resources. Indeed, containers may include standard units of software that packages code and its dependencies, such that a container node may execute the application stored in the container regardless of the computing environment or infrastructure. As a result, multiple containers may run on the same machine and share an operating system kernel with other containers, such that each container is running as an isolated process in the respective machine. In this way, container orchestration systems that operate in the IT environment build application services operate across multiple computing resources, such that certain applications - which may be packaged as software containers - may be automatically deployed, scaled, and managed in the same machine or across multiple machines in disparate computing environments. Using container orchestration systems to manage the operations of OT assets may realize many advantages including large scale application deployment, providing updates from managed registries, providing high availability using standby and backup container replicas in different OT assets, and the like. The present disclosure focuses on operations or devices within a converged network - e.g. a network harmonizing both, operation technology (OT) and information technology (IT) data exchanges and/or a network which may be supported with dedicated hardware of both technologies - in an industrial setup. Industrial control systems, however, need to be regularly or irregularly migrated without affecting the uptime of the production process.

For various reasons, including maintenance or performance enhancement, industrial control processes in general and virtual PLCs in particular need to be periodically or irregularly migrated from a current source server SCS to a destination server DTS without disrupting or affecting the uptime of the production process.

A high-level migration procedure is depicted in FIG. 6. This figure shows an abstract view of a virtual PLC vPLC migration from a current source server SCS on a respective left side, to a destination server DTS on a respective right side in each of the status illustrations ST1, ST2, ST3, ST4 as shown in FIG. 6. Both servers SCS, DTS may be hosted in a same Hyper-Converged Infrastructure HCI or on different Hyper-Converged Infrastructures in a scenario of distributed factories and data centers. The network NTW connecting, among others, the source server SCS and the destination server DTS may be deterministic. The network NTW may facilitate prioritized traffic steering, enabling high-priority data flows between both servers SCS, DTS subject to minimal and/or guaranteed delay.

The representation of FIG. 6 may also be applicable for depicting a scenario of another embodiment in which a non-virtual PLC is to be migrated, or, in other words, in which the control over IO devices has to be transferred from one PLC device to another PLC device. In this case, the migration from the first PLC device - in place of the source server SCS as shown in FIG. 6 - to the second PLC device - in place of the destination server DTS - may take place with a similar movement of dashed and solid lines - respectively corresponding to passive and active connections - as shown in FIG. 6.

In a first status ST1 the virtual Programmable Logical Controller vPLC is assumed to be executed on the source server SCS. A network connection - drawn with a solid vertical or inclined line - between the virtual Programmable Logical Controller vPLC and the network proxy NP assigned to an IO device in a production cell - not shown in FIG. 6 - may be operated normally. This first status ST1, may also be referred to as a premigration status or as a status before migration. In this status ST1 the network proxy NP - not shown in FIG. 6 - may be configured to permit the virtual Programmable Logic Controller vPLC residing on the source server SCS to exert control over the IO Devices in the production cell. Concurrently, the network proxy signal storage NPSS - not shown in FIG. 6 - may be responsible for storing pertinent signals and/or messages originating from both, the vPLC and the IO Devices. The primary objective of this signal and message storage is to facilitate a seamless transition of control. When the network proxy NP assumes control over an IO Device, it may continue precisely from the point where the virtual Programmable Logical Controller vPLC has ceased, thereby ensuring uninterrupted operation. Still in the first status ST1, subsequent to the network proxy manager NPM instructing the network proxy NP about an impending migration and the necessity for the NP network proxy to assume control of the IO Devices within the production cell, the connection or communication flow from the virtual Programmable Logic Controller vPLC may now be designated as »passive« to mean that the virtual PLC vPLC has ceased to directly manage the IO Devices. Nevertheless, the virtual Programmable Logic Controller vPLC may continue to receive messages from the network proxy passive receiver NPPR. This measure may be critical in preventing the virtual Programmable Logic Controller vPLC from detecting a disruption in connectivity to its IO Devices, which could potentially trigger a PROFINET Alarm. Simultaneously, the connection or communication flow towards the IO Devices may remain active. The network proxy NP may initiate intervening the active connection between the virtual Programmable Logic Controller vPLC and the IO Devices by transparently forwarding messages exchanged between the virtual Programmable Logical Controller vPLC and the industrial IO Devices. The network proxy NP may step in to actively control the operation of the IO Devices within the production cell, a role previously fulfilled by the vPLC.

A second status ST2 may represent a state of the network after the migration of the virtual Programmable Logical Controller vPLC from the source server SCS to the destination server DTS has been initialized. In this second status ST2 - which may also be referred as initialization - two main tasks may need to be done:
- A new virtual Programmable Logical Controller vPLC instance on the destination server DTS has to be created. This newly instantiated virtual Programmable Logical Controller vPLC is already depicted in the destination server DTS in addition to the still existing virtual Programmable Logical Controller vPLC on the source server SCS on the left side of the illustration of the second state ST2.
- setting up a new additional connection - drawn with a dashed vertical or diagonal line - between the Network proxy NP and the destination server DTS.

The new additional connection may have to be determined or »found« in the network such that Quality of service or QoS requirements - e.g., an end-to-end delay - from the production cell to the virtual Programmable Logical Controller vPLC may still be guaranteed. In this status ST2 the connection along the virtual Programmable Logical Controller vPLC, the destination server DTS, and the network proxy NP may be in a »passive« state which is illustrated by a dashed line. This passive state may mean that traffic from the IO device in the production cell may be already forwarded to the virtual Programmable Logical Controller vPLC executed in the destination server DTS, but the Network proxy NP may not forward an output of the virtual Programmable Logical Controller vPLC in the destination server DTS towards the IO device in the production cell, i.e. in the direction of the downward line. This still one-sided setup in this second status ST2 may serve to monitor, compare, and analyze the output of the virtual Programmable Logical Controllers vPLC on both servers SCS, DTS to determine whether a handover may be performed or not. In this second status ST2, the virtual Programmable Logical Controller vPLC residing in the source server SCS may still be responsible for handling the cell traffic, which may mean that the connection along the left solid line, ranging from the source server SCS to the Network proxy NP, may be still »active«. Still within the second status ST2, both connections from both vPLCs may turn to in passive state, the network proxy NP solely controlling the IO Devices in the production cell, which means that connection or communication flow to the IO Devices in the production cell remains active.

A third status ST3 may be characterized by a state synchronization of both virtual PLC instances vPLC, if at least one of the virtual PLCs vPLC is stateful. The synchronization may be exerted using a pre-copy virtual machine VM Migration. In case that the respective virtual Programmable Logical Controllers vPLC are stateless - or, in other words, not stateful - the third status ST3 may be skipped. During this step, both the connections from the vPLCs may turn to, or remain in a passive state.

In a fourth status ST4 the virtual PLC instance vPLC on the source server SCS may be deleted. The connection or message flow from the vPLC on the destination server SDT may still be in a passive mode. In this passive mode the virtual PLC instance vPLC may not actively control the IO Devices, but it still receives packets from the network proxy NP, thus ensuring that the control logic of the virtual PLC instance vPLC is up to date with the latest information from the IO Devices.

Still within the fourth status ST4, the network proxy NP may receive instructions from the network proxy manager NPM to relinquish control back to the virtual Programmable Logic Controller vPLC. Consequently, the connection or communication flow from the migrated vPLC becomes active, signifying that the migrated vPLC has assumed active control over the IO Devices within the production cell. Simultaneously, the network proxy NP may revert to a passive role with the network proxy signal storage NPSS continuing to store pertinent signals.

FIG. 7 illustrates a schematic process chart depicting an exchange of data transmissions with a network proxy NP being configured to actively control an IO device IOD within a production cell. The network proxy NP may be configured to actively control the IO Device and communications originating from the vPLC are considered passive, i.e., the virtual PLC instance vPLC no longer manages the IO Device.

According to an exemplary message exchange as depicted in FIG. 7, a first instruction message 701 may be transferred from the virtual PLC instance vPLC to the network proxy NP. This first instruction message 701 is not forwarded to its actual destination - the IO device IOD - as intended by the sender, the virtual PLC instance vPLC. Instead, the first instruction message 701 is terminated by the network proxy. This means that the network proxy is an endpoint of this message 701 and acts as the intended recipient without forwarding the first instruction message 701 to the intended recipient. A further consequence of this termination is that the network proxy NP representing the actually intended recipient - the IO device IOD - answers the incoming first instruction message 701 in place of the intended recipient i.e. the IO device IOD. The network proxy NP accordingly sends a second acknowledgement message 702 to the virtual PLC instance vPLC approving a correct reception by the intended recipient, i.e. the IO device IOD.

The network proxy NP may also assumes representation and termination over the IO device IOD. According to an exemplary message exchange as depicted in FIG. 7, a third notification message 703 may be transferred from the IO device to the network proxy NP. This third notification message 703 is not forwarded to its actual destination - the virtual PLC instance vPLC - as intended by the sender, the IO device IOD , but it is terminated by the network proxy NP. This means that the network proxy NP acts as the intended recipient without forwarding the third instruction message 703 to the intended recipient. A further consequence of this termination is that the network proxy NP representing the actually intended recipient - the virtual PLC instance vPLC - answers the incoming third instruction message 703 in place of the intended recipient i.e. the virtual PLC instance vPLC. The network proxy NP accordingly sends a fourth acknowledgement message 704 to the IO device IOD approving a correct reception by the intended recipient, i.e. virtual PLC instance vPLC.

This message exchange may be continued by a fifth instruction message 705 at the beginning of a next vPLC cycle, which is terminated by the network proxy NP and answered by a sixth acknowledgement message 706 on behalf of the intended recipient, and by a seventh notification message 707 at the beginning of a next IO device cycle, which is terminated by the network proxy NP and answered by an eight acknowledgement message 708 on behalf of the intended recipient.

Consequently, the virtual PLC instance vPLC may be migrated without any disruption in communication flow to the IO Device IOD. However, the vPLC continues to receive responses to its packets. This ensures that the vPLC does not perceive a communication disruption, which would make the vPLC raise a PROFINET Alarm and halt production.

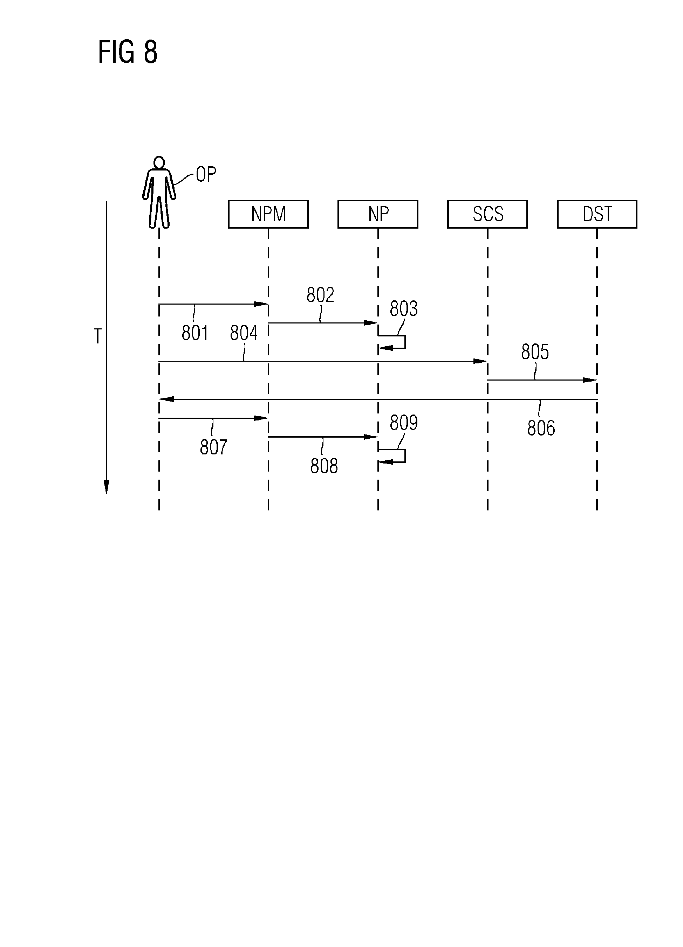

Fig. 8 illustrates a schematic process chart depicting a migration process according to the embodiments. FIG. 8 shows a schematic process chart depicting a chronologically ordered exchange of control and data transfer transmissions amongst various functional units OP, NPM, NP, SCS, SDT cooperating to environmentally control a migration of a virtual programmable logic controller. The sequence diagram, as depicted in FIG. 8, may represent the outcome of a network operator OP seeking - e.g. for maintenance purposes - to migrate a control software vPLC being executed inside a virtual machine or a container from a source server SCS to a destination server DTS.

In a first step of the method as shown, the operator OP may enter a migration command to a - not shown - management system, e.g., via a console. Said management system or any other module or system within a production plant may also have made this decision without human intervention and issued the migration command based on automatic routines. In the course of this command, a first command message 801 may be transferred from the management system of the operator OP to the network proxy manager NPM, the command message 801 instructing the network proxy manager NPM to assume control of IO of one or more IO Devices which may be affected by the upcoming migration in order to allow for a migration of a - not shown - virtual Programmable Logical Controller or vPLC from the source server SCS to the destination server DTS. In a consecutive step, a second command message 802 may be sent from the network proxy manager NPM to the network proxy NP instructing the network proxy NP to assume control of the one or more IO devices. In a loop 803, the network proxy NP may process the received command message 802, amend its internal configuration and assume control of one or more IO Devices as instructed.

In a consecutive step, a fourth instruction message 804 may be sent from the management system of the operator OP to the source server SCS instructing the source server SCS to migrate the virtual PLC instance vPLC currently being executed on the source server SCS to the destination server DST using a defined migration process, for instance a migration process under supervision of the virtual infrastructure manager VIM. In the event that the virtual Programmable Logic Controller to be transferred possesses a stateful nature, the Virtual Infrastructure Manager VIM may orchestrate a state transfer. Consequently, the source server SCS may transmit one or more fifth data messages 805 to the destination server DTS for transferring its memory contents. Beneficially, the described embodiments exhibit a significant degree of flexibility and robustness, as they neither rely on nor are dependent on the specific method employed for the migration of the virtual Programmable Logic Controller, nor on the duration of this process. This advantageous characteristic ensures that the system may accommodate a wide range of migration strategies and timeframes, thereby enhancing its adaptability and effectiveness in diverse operational contexts.

The destination server DTS, after having successfully completed the vPLC state transfer may communicate to the management system of the operator OP that the vPLC migration has been successfully concluded by transmitting a sixth report message 806. Subsequently, a seventh command message 807 may be transferred from the management system of the operator OP to the network proxy manager NPM, the command message 807 instructing the network proxy manager NPM to transfer control over the one or more IO devices from the intermediary acting network proxy NP to the newly instantiated virtual Programmable Logical Controller or vPLC which is now residing on the destination server DTS. In a consecutive step, an eighth command message 808 may be sent from the network proxy manager NPM to the network proxy NP instructing the network proxy NP to give up control of the one or more IO devices. In a loop 809, the network proxy NP may process the received command message 808, amend its internal configuration and relinquish control of one or more IO Devices as instructed.

The present embodiments enable a migration procedure, designed to function without any buffering at the destination server. They may be utilized not only within factories but also across multiple factories and cloud infrastructures, thereby supporting a broad spectrum of use cases. The proxy mechanism according to the present embodiments may be placed flexibly over the infrastructure. A key feature of the present embodiments is their ability to prevent any interruption in control processes, ensuring seamless operation.

The present embodiments provide an interruption-free deployment or migration of Programmable Logic Controllers, which may be embodied as a device or as a virtual PLCs which may be part of an industrial process software. A proposed method involves the use of a network proxy representative of the Programmable Logic Controller during the transfer process to control at least one IO device. The network proxy may intervene in an active connection between a source PLC and the at least one IO device, transparently forwarding messages exchanged between them. Subsequently, this active connection may be converted into a passive one, with the network proxy assuming control over the at least one IO device from the source PLC and continuing to respond to messages sent from the IO devices. Subsequently, a second passive connection may be established between a destination PLC and the NP. This connection may be used to transparently forward duplicate messages exchanged between the network proxy and the IO devices to the destination PLC, with the network proxy maintaining control over the IO devices. The passive connection between the source PLC and the IOD may then be terminated. The second passive connection may be converted into an active one, extending from the destination PLC to the IO devices, with the destination PLC assuming control over the IO devices from the network proxy. The present embodiments ensure a smooth and uninterrupted transition of control from one PLC to another.

Advantageously, the present embodiments may operate independently of a target platform which also allows for operation across geographically distributed computing resources and/or data centers. The present embodiments permit the deployment of multiple proxy instances. This flexibility enables the proxy to be positioned according to the specific demands of a production plant, while also optimizing the use of available resources. Different placements may offer various advantages, such as reduced latency or decreased data rate consumption.

While the present invention has been described above by reference to various embodiments, it should be understood that many changes and modifications can be made to the described embodiments.

## Claims

1. A method for deploying a Programmable Logic Controller or PLC for controlling at least one IO device (IOD) utilizing a network proxy (NP) during the deployment, the method comprising the steps of:
a) intervening, by the network proxy (NP), an active connection between a source PLC (PLCS) and the at least one IO device (IOD) by transparently forwarding messages exchanged between the source PLC (PLCS) and the at least one IO device (IOD);
b) converting, by the network proxy (NP), the active connection between the source PLC (PLCS) and the at least one IO device (IOD) into a passive connection by respectively terminating messages exchanged between the at least one IO device (IOD) and the source PLC (PLCS) by the network proxy (NP), the network proxy (NP) assuming control over the at least one IO device (IOD) from the source PLC (PLCS), the network proxy (NP) continuing to respond to messages sent from the at least one IO device (IOD) by the network proxy (NP) instead of the source PLC:
c) establishing, by the network proxy (NP), a second passive connection between a destination PLC (PLCD) and the network proxy (NP) for transparently forwarding duplicate messages exchanged between the network proxy (NP) and the at least one IO device (IOD) to the destination PLC (PLCD), wherein the network proxy (NP) is continuing to control the at least one IO device (IOD);
d) terminating, by the network proxy (NP), the passive connection between the source PLC (PLCS) and the at least one IO device (IOD), converting the second passive connection between the destination PLC (PLCD) and the network proxy (NP) into an active connection extending from the destination PLC (PLCD) to the at least one IO device (IOD), the destination PLC (PLCD) assuming control over the at least one IO device (IOD) from the network proxy (NP).

2. The method according to claim 1 including the step of:
a1) storing signals and/or messages from the source PLC (PLCS), the destination PLC (PLCD) and/or the at least one IO device (IOD) for utilizing the stored signals and/or messages when the destination PLC (PLCD) assumes control.

3. The method according to one of the preceding claims 1 and 2, including the step of:
c1) orchestrating, by a virtual Infrastructure Manager (VIM) a state transfer by transferring memory contents from a source server (SCS) hosting the source PLC (PLCS) to a destination server (DTS) hosting the destination PLC (PLCD).

4. The method according to claim 1 wherein a network proxy packet parser (NPPP) of the network proxy (NP) parses one or more data packets exchanged between a source IO device (IOD) of the at least one IO device (IOD) and the source PLC (PLCS) or the destination PLC (PLCD).

5. The method according to claim 4, wherein the network proxy packet parser (NPPP) selectively parses for segments within said one or more data packets, said segments determining a forwarding of the at least parts of said one or more data packets to one of a network proxy packet manager handler (NPPMH), a network proxy PLC replier (NPPR), or a network proxy IO device replier (NPIODR).

6. The method according to claim 1 wherein the second passive connection between the destination PLC (PLCD) and the network proxy (NP) is established such that network requirements are met, including quality-of-service requirements such as a maximum end-to-end-delay in the connection between the destination PLC (PLCD) and the at least one IO device (IOD).

7. The method according to claim 1 wherein a network NTW connecting the network proxy NP is a deterministic network or a network connecting time-synchronized network components.

8. A network proxy for deploying a Programmable Logic Controller or PLC for controlling at least one IO device (IOD) utilizing a network proxy (NP) during said transfer, the network proxy (NP) including:
a) a network proxy packet manager handler configured for intervening an active connection between a source PLC (PLCS) and the at least one IO device (IOD) by transparently forwarding messages exchanged between the source PLC (PLCS) and the at least one IO device (IOD);
b) the network proxy (NP) being configured for converting the active connection between the source PLC (PLCS) and the at least one IO device (IOD) into a passive connection by respectively terminating messages exchanged between the at least one IO device (IOD) and the source PLC (PLCS), the network proxy (NP) further configured for assuming control over the at least one IO device (IOD) from the source PLC (PLCS) while continuing to respond to messages sent from the at least one IO device (IOD) instead of the source PLC;
c) the network proxy (NP) being configured for establishing a second passive connection between a destination PLC (PLCD) and the network proxy (NP) for transparently forwarding duplicate messages exchanged between the network proxy (NP) and the at least one IO device (IOD) to the destination PLC (PLCD) while continuing to control the at least one IO device (IOD);
d) the network proxy (NP) being configured for terminating the passive connection between the source PLC (PLCS) and the at least one IO device (IOD), converting the second passive connection between the destination PLC (PLCD) and the network proxy (NP) into an active connection extending from the destination PLC (PLCD) to the at least one IO device (IOD), the destination PLC (PLCD) assuming control over the at least one IO device (IOD) from the network proxy (NP).

9. The network proxy according to claim 8 including a network proxy signal storage (NPSS) for storing signals and/or messages from the source PLC (PLCS), the destination PLC (PLCD) and/or the IO device (IOD) and for replaying the stored signals and/or messages to a destination PLC (PLCD) assuming control over the at least one IO device (IOD).

10. The network proxy according to claim 9 including a network proxy IO device replier (NPIODR) for receiving signals and/or messages originating from the at least one a Z IO device (IOD) accessing the network proxy signal storage (NPSS) to retrieve information pertaining to a the source PLC (PLCS) or the destination PLC (PLCD) for which the incoming signals and/or messages were intended and to generate an appropriate content responding said incoming signals and/or messages.

11. The network proxy according to claim 9 including a network proxy PLC replier (NPPR) for receiving signals and/or messages originating from the source PLC (PLCS) or from the destination PLC (PLCD), accessing the network proxy signal storage (NPSS) to retrieve information pertaining to the Z r at least one , Z IO device (IOD) for which the incoming signals and/or messages were intended and to generate an appropriate content responding said incoming signals and/or messages.

## Patentansprüche

1. Verfahren für den Einsatz einer speicherprogrammierbaren Steuerung oder SPS zum Steuern mindestens einer E/A-Vorrichtung (IOD) unter Nutzung eines Netzwerk-Proxys (NP) beim Einsatz, wobei das Verfahren folgende Schritte umfasst:
a) Intervenieren in eine aktive Verbindung zwischen einer Quell-SPS (PLCS) und der mindestens einen E/A-Vorrichtung (IOD) durch den Netzwerk-Proxy (NP) durch transparentes Weiterleiten von Nachrichten, die zwischen der Quell-SPS (PLCS) und der mindestens einen E/A-Vorrichtung (IOD) ausgetauscht werden,
b) Umwandeln der aktiven Verbindung zwischen der Quell-SPS (PLCS) und der mindestens einen E/A-Vorrichtung (IOD) in eine passive Verbindung durch den Netzwerk-Proxy (NP) durch jeweiliges Abbrechen von zwischen der mindestens einen E/A-Vorrichtung (IOD) und der Quell-SPS (PLCS) ausgetauschten Nachrichten durch den Netzwerk-Proxy (NP), wobei der Netzwerk-Proxy (NP) die Kontrolle über die mindestens eine E/A-Vorrichtung (IOD) von der Quell-SPS (PLCS) übernimmt, wobei der Netzwerk-Proxy (NP) weiterhin auf Nachrichten reagiert, die durch den Netzwerk-Proxy (NP) aus der mindestens einen E/A-Vorrichtung (IOD) statt der Quell-SPS gesendet werden,
c) Einrichten einer zweiten passiven Verbindung zwischen einer Ziel-SPS (PLCD) und dem Netzwerk-Proxy (NP) durch den Netzwerk-Proxy (NP) zum transparenten Weiterleiten doppelter Nachrichten, die zwischen dem Netzwerk-Proxy (NP) und der mindestens einen E/A-Vorrichtung (IOD) ausgetauscht werden, zur Ziel-SPS (PLCD), wobei der Netzwerk-Proxy (NP) weiterhin die mindestens eine E/A-Vorrichtung (IOD) steuert,
d) Abbrechen der passiven Verbindung zwischen der Quell-SPS (PLCS) und der mindestens einen E/A-Vorrichtung (IOD) durch den Netzwerk-Proxy (NP), Umwandeln der zweiten passiven Verbindung zwischen der Ziel-SPS (PLCD) und dem Netzwerk-Proxy (NP) in eine aktive Verbindung von der Ziel-SPS (PLCD) zu der mindestens einen E/A-Vorrichtung (IOD), wobei die Ziel-SPS (PLCD) die Kontrolle über die mindestens eine E/A-Vorrichtung (IOD) von dem Netzwerk-Proxy (NP) übernimmt.

2. Verfahren nach Anspruch 1 mit folgendem Schritt:
a1) Speichern von Signalen und/oder Nachrichten aus der Quell-SPS (PLCS), der Ziel-SPS (PLCD) und/oder der mindestens einen E/A-Vorrichtung (IOD) für die Nutzung der gespeicherten Signale und/oder Nachrichten, wenn die Ziel-SPS (PLCD) die Kontrolle übernimmt.

3. Verfahren nach einem der vorhergehenden Ansprüche 1 und 2 mit folgendem Schritt:
c1) Organisieren eines Zustandstransfers durch einen virtuellen Infrastrukturmanager (VIM) durch Transferieren von Speicherinhalten aus einem Quell-Server (SCS), auf dem die Quell-SPS (PLCS) gehostet ist, auf einen Ziel-Server (DTS), auf dem die Ziel-SPS (PLCD) gehostet ist.

4. Verfahren nach Anspruch 1, wobei ein Netzwerk-Proxy-Paket-Parser (NPPP) des Netzwerk-Proxys (NP) ein oder mehrere Datenpakete parst, die zwischen einer Quell-E/A-Vorrichtung (IOD) der mindestens einen E/A-Vorrichtung (IOD) und der Quell-SPS (PLCS) oder der Ziel-SPS (PLCD) ausgetauscht werden.

5. Verfahren nach Anspruch 4, wobei der Netzwerk-Proxy-Paket-Parser (NPPP) gezielt auf Segmente in dem einen oder den mehreren Datenpaketen hin parst, wobei die Segmente über ein Weiterleiten zumindest von Teilen des einen oder der mehreren Datenpakete zu einem Netzwerk-Proxy-Paketmanager-Handler (NPPMH), einem Netzwerk-Proxy-SPS-Replier (NPPR) oder einem Netzwerk-Proxy-E/A-Vorrichtung-Replier (NPIODR) entscheiden.

6. Verfahren nach Anspruch 1, wobei die zweite passive Verbindung zwischen der Ziel-SPS (PLCD) und dem Netzwerk-Proxy (NP) so eingerichtet wird, dass Netzwerkanforderungen, einschließlich Dienstgüteanforderungen wie eine maximale Verzögerung von einem Ende zum anderen, bei der Verbindung zwischen der Ziel-SPS (PLCD) und der mindestens einen E/A-Vorrichtung (IOD) eingehalten werden.

7. Verfahren nach Anspruch 1, wobei es sich bei einem Netzwerk NTW zum Verbinden des Netzwerk-Proxys NP um ein deterministisches Netzwerk handelt oder um ein Netzwerk, das zeitlich synchronisierte Netzwerkkomponenten verbindet.

8. Netzwerk-Proxy für den Einsatz einer speicherprogrammierbaren Steuerung oder SPS zum Steuern mindestens einer E/A-Vorrichtung (IOD) unter Nutzung eines Netzwerk-Proxys (NP) beim Transfer, wobei der Netzwerk-Proxy (NP) Folgendes aufweist:
a) einen Netzwerk-Proxy-Paketmanager-Handler, der so konfiguriert ist, dass er durch transparentes Weiterleiten von Nachrichten, die zwischen einer Quell-SPS (PLCS) und der mindestens einen E/A-Vorrichtung (IOD) ausgetauscht werden, in eine aktive Verbindung zwischen der Quell-SPS (PLCS) und der mindestens einen E/A-Vorrichtung (IOD) interveniert,
b) wobei der Netzwerk-Proxy (NP) so konfiguriert ist, dass er die aktive Verbindung zwischen der Quell-SPS (PLCS) und der mindestens einen E/A-Vorrichtung (IOD) durch jeweiliges Abbrechen von zwischen der mindestens einen E/A-Vorrichtung (IOD) und der Quell-SPS (PLCS) ausgetauschten Nachrichten in eine passive Verbindung umwandelt, wobei der Netzwerk-Proxy (NP) ferner so konfiguriert ist, dass er die Kontrolle über die mindestens eine E/A-Vorrichtung (IOD) von der Quell-SPS (PLCS) übernimmt, während er weiterhin auf Nachrichten reagiert, die aus der mindestens einen E/A-Vorrichtung (IOD) statt der Quell-SPS gesendet werden,
c) wobei der Netzwerk-Proxy (NP) so konfiguriert ist, dass er zwischen einer Ziel-SPS (PLCD) und dem Netzwerk-Proxy (NP) eine zweite passive Verbindung zum transparenten Weiterleiten doppelter Nachrichten, die zwischen dem Netzwerk-Proxy (NP) und der mindestens einen E/A-Vorrichtung (IOD) ausgetauscht werden, zur Ziel-SPS (PLCD) einrichtet, während er weiterhin die mindestens eine E/A-Vorrichtung (IOD) steuert;
d) wobei der Netzwerk-Proxy (NP) so konfiguriert ist, dass er die passive Verbindung zwischen der Quell-SPS (PLCS) und der mindestens einen E/A-Vorrichtung (IOD) abbricht, die zweite passive Verbindung zwischen der Ziel-SPS (PLCD) und dem Netzwerk-Proxy (NP) in eine aktive Verbindung von der Ziel-SPS (PLCD) zu der mindestens einen E/A-Vorrichtung (IOD) umwandelt, wobei die Ziel-SPS (PLCD) die Kontrolle über die mindestens eine E/A-Vorrichtung (IOD) von dem Netzwerk-Proxy (NP) übernimmt.

9. Netzwerk-Proxy nach Anspruch 8 mit einem Netzwerk-Proxy-Signalspeicher (NPSS) zum Speichern von Signalen und/oder Nachrichten aus der Quell-SPS (PLCS), der Ziel-SPS (PLCD) und/oder der E/A-Vorrichtung (IOD) und zum Abspielen der gespeicherten Signale und/oder Nachrichten für eine Ziel-SPS (PLCD), die die Kontrolle über die mindestens eine E/A-Vorrichtung (IOD) übernimmt.

10. Netzwerk-Proxy nach Anspruch 9 mit einem Netzwerk-Proxy-E/A-Vorrichtung-Replier (NPIODR) zum Empfangen von Signalen und/oder Nachrichten, die aus der mindestens einen E/A-Vorrichtung (IOD) stammen, zum Zugreifen auf den Netzwerk-Proxy-Signalspeicher (NPSS) zwecks Abrufens von Informationen zur Quell-SPS (PLCS) oder zur Ziel-SPS (PLCD), für die die eintreffenden Signale und/oder Nachrichten gedacht waren, und zum Generieren von geeignetem Inhalt als Antwort auf die eintreffenden Signale und/oder Nachrichten.

11. Netzwerk-Proxy nach Anspruch 9 mit einem Netzwerk-Proxy-SPS-Replier (NPPR) zum Empfangen von Signalen und/oder Nachrichten, die aus der Quell-SPS (PLCS) oder der Ziel-SPS (PLCD) stammen, zum Zugreifen auf den Netzwerk-Proxy-Signalspeicher (NPSS) zwecks Abrufens von Informationen zu der mindestens einen E/A-Vorrichtung (IOD), für die die eintreffenden Signale und/oder Nachrichten gedacht waren, und zum Generieren von geeignetem Inhalt als Antwort auf die eintreffenden Signale und/oder Nachrichten.

## Revendications

1. Procédé de déploiement d'un automate programmable ou PLC pour commander au moins un dispositif IO (IOD) en utilisant un proxy réseau (NP) pendant le déploiement, le procédé comprenant les étapes de :
a) intervention, par le proxy réseau (NP), sur une connexion active entre un PLC source (PLCS) et l'au moins un dispositif IO (IOD) en acheminant de manière transparente les messages échangés entre le PLC source (PLCS) et l'au moins un dispositif IO (IOD) ;
b) conversion, par le proxy réseau (NP), de la connexion active entre le PLC source (PLCS) et l'au moins un dispositif IO (IOD) en une connexion passive en mettant respectivement fin, par le proxy réseau (NP), aux messages échangés entre l'au moins un dispositif IO (IOD) et le PLC source (PLCS), le proxy réseau (NP) prenant la commande de l'au moins un dispositif IO (IOD) à la place du PLC source (PLCS), le proxy réseau (NP) continuant à répondre aux messages envoyés par l'au moins un dispositif IO (IOD) par le proxy réseau (NP) à la place du PLC source
c) établissement, par le proxy réseau (NP), d'une seconde connexion passive entre un PLC de destination (PLCD) et le proxy réseau (NP) afin d'acheminer de manière transparente des messages dupliqués échangés entre le proxy réseau (NP) et l'au moins un dispositif IO (IOD) vers le PLC de destination (PLCD), dans lequel le proxy réseau (NP) continue à commander l'au moins un dispositif IO (IOD) ;
d) terminaison, par le proxy réseau (NP), de la connexion passive entre le PLC source (PLCS) et l'au moins un dispositif IO (IOD), et conversion, par le proxy réseau (NP), de la seconde connexion passive entre le PLC de destination (PLCD) et le proxy réseau (NP) en une connexion active s'étendant du PLC de destination (PLCD) à l'au moins un dispositif IO (IOD), le PLC de destination (PLCD) prenant la commande de l'au moins un dispositif IO (IOD) à la place du proxy réseau (NP).

2. Procédé selon la revendication 1, comprenant l'étape de :
a1) stockage de signaux et/ou messages provenant du PLC source (PLCS), du PLC de destination (PLCD) et/ou de l'au moins un dispositif IO (IOD) afin d'utiliser les signaux et/ou messages stockés lorsque le PLC de destination (PLCD) prend la commande.

3. Procédé selon l'une des revendications 1 et 2 précédentes, comprenant l'étape de :
c1) orchestration, par un gestionnaire d'infrastructure virtuelle (VIM), d'un transfert d'état en transférant du contenu de mémoire d'un serveur source (SCS) hébergeant le PLC source (PLCS) vers un serveur de destination (DTS) hébergeant le PLC de destination (PLCD).

4. Procédé selon la revendication 1, dans lequel un analyseur de paquets de proxy réseau (NPPP) du proxy réseau (NP) analyse un ou plusieurs paquets de données échangés entre un dispositif IO source (IOD) parmi l'au moins un dispositif IO (IOD) et le PLC source (PLCS) ou le PLC de destination (PLCD).

5. Procédé selon la revendication 4, dans lequel l'analyseur de paquets de proxy réseau (NPPP) analyse de manière sélective des segments au sein dudit un ou plusieurs paquets de données, lesdits segments déterminant un acheminement des au moins parties dudit un ou plusieurs paquets de données vers l'un parmi un gestionnaire de traitement de paquets de proxy réseau (NPPMH), un répondeur de PLC de proxy réseau (NPPR) ou un répondeur de dispositif IO de proxy réseau (NPIODR).

6. Procédé selon la revendication 1, dans lequel la seconde connexion passive entre le PLC de destination (PLCD) et le proxy réseau (NP) est établie de manière à satisfaire aux exigences du réseau, y compris les exigences de qualité de service telles qu'un délai maximal de bout en bout dans la connexion entre le PLC de destination (PLCD) et l'au moins un dispositif IO (IOD).

7. Procédé selon la revendication 1, dans lequel un réseau NTW reliant le proxy réseau NP est un réseau déterministe ou un réseau reliant des composants réseau synchronisés dans le temps.

8. Proxy réseau pour le déploiement d'un automate programmable ou PLC pour commander au moins un dispositif IO (IOD) en utilisant un proxy réseau (NP) pendant ledit transfert, le proxy réseau (NP) comprenant :
a) un gestionnaire de traitement de paquets de proxy réseau configuré pour intervenir sur une connexion active entre un PLC source (PLCS) et l'au moins un dispositif IO (IOD) en acheminant de manière transparente des messages échangés entre le PLC source (PLCS) et l'au moins un dispositif IO (IOD) ;
b) le proxy réseau (NP) étant configuré pour convertir la connexion active entre le PLC source (PLCS) et l'au moins un dispositif IO (IOD) en une connexion passive en mettant respectivement fin aux messages échangés entre l'au moins un dispositif IO (IOD) et le PLC source (PLCS), le proxy réseau (NP) étant en outre configuré pour prendre la commande de l'au moins un dispositif IO (IOD) à la place du PLC source (PLCS) tout en continuant à répondre à des messages envoyés par l'au moins un dispositif IO (IOD) à la place du PLC source ;
c) le proxy réseau (NP) étant configuré pour établir une seconde connexion passive entre un PLC de destination (PLCD) et le proxy réseau (NP) afin d'acheminer de manière transparente des messages dupliqués échangés entre le proxy réseau (NP) et l'au moins un dispositif IO (IOD) vers le PLC de destination (PLCD) tout en continuant à commander l'au moins un dispositif IO (IOD) ;
d) le proxy réseau (NP) étant configuré pour mettre fin à la connexion passive entre le PLC source (PLCS) et l'au moins un dispositif IO (IOD), convertir la seconde connexion passive entre le PLC de destination (PLCD) et le proxy réseau (NP) en une connexion active s'étendant du PLC de destination (PLCD) à l'au moins un dispositif IO (IOD), le PLC de destination (PLCD) prenant la commande de l'au moins un dispositif IO (IOD) à la place du proxy réseau (NP).

9. Proxy réseau selon la revendication 8, comprenant un dispositif de stockage de signaux de proxy réseau (NPSS) pour stocker des signaux et/ou messages provenant du PLC source (PLCS), du PLC de destination (PLCD) et/ou du dispositif IO (IOD), et retransmettre les signaux et/ou messages stockés à un PLC de destination (PLCD) prenant la commande de l'au moins un dispositif IO (IOD).

10. Proxy réseau selon la revendication 9, comprenant un répondeur de dispositif IO de proxy réseau (NPIODR) pour recevoir des signaux et/ou messages provenant de l'au moins un dispositif IO (IOD), accéder au dispositif de stockage de signaux de proxy réseau (NPSS) pour récupérer des informations relatives au PLC source (PLCS) ou au PLC de destination (PLCD) auxquels les signaux et/ou messages entrants étaient destinés, et générer un contenu approprié en réponse auxdits signaux et/ou messages entrants.

11. Proxy réseau selon la revendication 9, comprenant un répondeur de PLC de proxy réseau (NPPR) pour recevoir des signaux et/ou messages provenant du PLC source (PLCS) ou du PLC de destination (PLCD), accéder au dispositif de stockage de signaux de proxy réseau (NPSS) pour extraire des informations relatives à l'au moins un dispositif IO (IOD) auquel les signaux et/ou messages entrants étaient destinés, et pour générer un contenu approprié en réponse auxdits signaux et/ou messages entrants.
